# EUROPEAN PATENT APPLICATION

(11) **EP 4 714 631 A1**
(43) Date of publication of application: **25.03.2026**
(21) Application number: 24810939.9
(22) Date of filing: 13.05.2024
(51) Int. Cl.: B29C 45/14, B23K 26/352, C08L 23/02, C08L 81/02

(54) **METAL-RESIN COMPOSITE MOLDED ARTICLE, METHOD FOR MANUFACTURING METAL-RESIN COMPOSITE MOLDED ARTICLE, AND METHOD FOR PROCESSING METALLIC MEMBER**

(30) Priority: 19.05.2023 JP 2023083021
(71) Applicant: Polyplastics Co., Ltd., Tokyo 108-8280 (JP)
(72) Inventor: HIROTA, Kento, Fuji-shi, Shizuoka 416-8533 (JP); OHI, Kazuki, Fuji-shi, Shizuoka 416-8533 (JP)
(74) Representative: Maiwald GmbH
(86) International application number: PCT/JP2024/017575
(87) International publication number: WO 2024/241932

(57) **Abstract**

The present invention is intended to improve the airtightness of the joint between a metallic member and a polyarylene sulfide resin composition member when the members are joined. An aspect of the present invention is a metal-resin composite molded article in which a metallic member and a polyarylene sulfide resin composition member are joined. Of one surface of the metallic member, a surface portion joined to the polyarylene sulfide resin composition member has an arithmetic mean peak curvature of 5,000 to 7,000 (1/mm), and a polyarylene sulfide resin composition contained in the polyarylene sulfide resin composition member has a melt viscosity of 20 to 210 Pa·s in accordance with ISO 11433 at 310°C at 1,000 sec⁻¹.

## Description

### FIELD

The present invention relates to a technique of joining a metallic member and a polyarylene sulfide resin composition.

### BACKGROUND

A combination of materials having different properties, including an electrically conductive material such as a metal and an electrically insulating material such as a resin, yields light-weight, high-strength, or high-performance parts, which are used in various fields. For example, metal-resin composite molded articles manufactured by joining a metallic member and a thermoplastic resin are used as automotive interior members such as a console box around an instrument panel, parts around an engine, interior parts, casings for electronic devices such as a digital camera and a cell phone, interface connectors, power terminals, and the like.

To join different materials such as a metal and a resin, methods such as adhesion and screw fastening are typically used but are undesirable because the number of steps or parts increases. To address this problem, various methods have been disclosed to join a metal material and a resin material.

For example, JP 4020957 B discloses that a surface of a metal material is subjected to laser processing in a certain scanning direction and to laser processing in another scanning direction crossing the certain scanning direction, and the surface is joined to a different material. JP 2020-116806 A discloses an improvement in joint strength between a metal plate and a resin molded article. The improvement is achieved by setting the undercut rate of irregularities within a certain range when the irregularities are formed on the surface. JP 2013-71312 A discloses a composite molded body of a metal and a resin. In the composite molded body, crater-like indents are formed on the metal by laser beams or the like, and on ridge-like protrusions formed by melting and scattering the metal surface, granular spatters are formed. JP 6819798 A discloses a composite structure in which a surface-roughened metallic member and a PPS resin composition member are joined. In the composite structure, any five points on the surface of the surface-roughened metallic member have a developed interfacial area ratio (Sdr) of not less than 5 in terms of number average as determined in accordance with ISO (International Organization for Standardization) 25178 under a confocal microscope, and the PPS resin has a melt viscosity ranging from 15 to 500 [Pa·s].

### BRIEF SUMMARY

### TECHNICAL PROBLEM

Conventional methods of joining a metal material and a resin material fail to ensure sufficient airtightness of the joint between the metal material and the resin material, and there is a demand for an improvement in the airtightness.

The present invention is therefore intended to provide a method of manufacturing a metal-resin composite molded article in which a metallic member and a polyarylene sulfide resin composition member are joined and the airtightness of the joint is improved, a manufactured metal-resin composite molded article, and a method for processing a metallic member.

### SOLUTION TO PROBLEM

A first aspect of the present invention is a metal-resin composite molded article in which a metallic member and a polyarylene sulfide resin composition member are joined. The metal-resin composite molded article comprises a polyarylene sulfide resin composition having excellent flowability, and of one surface of the metallic member, a surface portion joined to the polyarylene sulfide resin composition member has an arithmetic mean peak curvature of 5,000 to 7,000 (1/mm) as a surface property.

A second aspect of the present invention is a method for processing a metallic member for a metal-resin composite molded article in which a metallic member and a polyarylene sulfide resin composition member are joined. In the processing method, irradiating a surface of a metallic member with high-energy beams makes the surface have an arithmetic mean peak curvature of 5,000 to 7,000 (1/mm) as a surface property.

A third aspect of the present invention is a method for manufacturing a metal-resin composite molded article in which a metallic member and a polyarylene sulfide resin composition member are joined. In the manufacturing method, irradiating a surface of a metallic member with high-energy beams makes the surface of the metallic member have an arithmetic mean peak curvature of 5,000 to 7,000 (1/mm) as a surface property. Next, the metallic member is inserted into a mold, and a polyarylene sulfide resin composition having a melt viscosity of 20 to 210 Pa·s is injection molded. Accordingly, the polyarylene sulfide resin composition member is joined to the surface of the metallic member.

### ADVANTAGEOUS EFFECTS

According to the aspects of the present invention, the joint of a metal-resin composite molded article in which a metallic member and a member of a polyarylene sulfide resin composition are joined has higher airtightness.

### BRIEF DESCRIPTION OF DRAWINGS

FIG. 1 is a view schematically showing a method for processing a metallic member in an embodiment.
FIG. 2 is a view showing exemplary metallic clusters formed in a laser irradiation area of a metallic member.
FIGS. 3 are views each schematically showing the state of the interface between a metallic member and a polyarylene sulfide resin composition member, corresponding to the magnitude of surface Spc of the polyarylene sulfide resin composition member in a metal-resin composite molded article in an embodiment.
FIGS. 4 are views showing the shape of a test piece used in an airtightness test.
FIG. 5 is a view schematically showing the structure of a test apparatus for the airtightness test.

### DETAILED DESCRIPTION

Hereinafter, a metal-resin composite molded article pertaining to a first embodiment of the present invention will be described.

A metal-resin composite molded article in an embodiment is manufactured by joining a metallic member and a resin composition member, specifically, a polyarylene sulfide resin composition member. The metal-resin composite molded article has irregularities on a joint face of one surface of the metallic member that is joined to the polyarylene sulfide resin composition member.

In an embodiment, the irregularities on the joint face are formed of substantially spherical metallic clusters. The "substantially spherical" metallic cluster includes not only a metallic cluster having a perfectly spherical shape but also a metallic cluster having a spheroidal shape, a chipped spherical shape, or a chipped spheroidal shape.

The substantially spherical metallic clusters may be formed by irradiating the surface of a metallic member with, for example, laser beams. For example, by irradiating the surface of a metallic member with laser beams in certain irradiation conditions, spherical metallic clusters are formed on the metallic member surface. Intensive studies by the inventors of the present application have revealed that when the joint face of one surface of a metallic member that is joined to a polyarylene sulfide resin composition member has an intended surface roughness as a surface property, the joint face between the metallic member and the polyarylene sulfide resin composition member in the metal-resin composite molded article can have higher airtightness than conventional joint faces. The following embodiments will describe a case in which an intended surface roughness is achieved by forming substantially spherical clusters on the joint face between a metallic member and a polyarylene sulfide resin composition member, but the case is merely an example. Only an intended surface roughness is needed on the joint face between a metallic member and a polyarylene sulfide resin composition member, but the surface treatment method is not limited.

The metallic member, the resin composition member, and the metal-resin composite molded article may have any shape, and the present embodiment is applicable to a metal-resin composite molded article having any shape.

The metal contained in the metallic member included in the metal-resin composite molded article is not limited, but examples include aluminum, copper, silver, gold, iron, titanium, nickel, magnesium, zinc, and alloys thereof such as carbon steel and stainless steel.

The surface of the metallic member may be subjected to surface treatment such as anodization or be coated. From the viewpoint of lightweight or strength, the metal is preferably aluminum, magnesium, copper, or titanium. In applications where electric conductivity is needed, for example, in a terminal application, aluminum or copper is more preferably used, and copper is particularly preferred. In applications where thin-wall rigidity is needed, magnesium or titanium, especially titanium, is particularly preferred.

### [Polyarylene sulfide resin]

A polyarylene sulfide resin (hereinafter, also called "PAS resin") used in the polyarylene sulfide resin composition features excellent mechanical properties, electrical properties, heat resistance, and other physical and chemical properties as well as good processability. The polyarylene sulfide resin is a polymer compound mainly containing, as a repeating unit, -(Ar-S)- (Ar is an arylene group, and Ar-S is an arylene sulfide group). In the present embodiment, a polyarylene sulfide resin having a generally known molecular structure may be used.

Examples of the arylene group include a p-phenylene group, a m-phenylene group, an o-phenylene group, a substituted phenylene group, a p,p'-diphenylene sulfone group, a p,p'-biphenylene group, a p,p'-diphenylene ether group, a p,p'-diphenylene carbonyl group, and a naphthalene group. The PAS resin may be a homopolymer containing only such a repeating unit as described above. Alternatively, a copolymer containing different repeating units as described below may also be preferred from the viewpoint of processability or the like.

The homopolymer is preferably a polyphenylene sulfide resin containing, as the repeating unit, a p-phenylene sulfide group having a p-phenylene group as the arylene group. The copolymer is preferably a copolymer containing a combination of two or more different arylene sulfide groups including the arylene group. Specifically, a copolymer containing a combination of a p-phenylene sulfide group and a m-phenylene sulfide group is particularly preferably used. Of the copolymers, a copolymer containing a p-phenylene sulfide group at a content of 70% by mole or more, preferably 80% by mole or more, is suitable from the viewpoint of heat resistance, moldability, mechanical properties, and other physical properties. Of these polyarylene sulfide resins, a high-molecular-weight polymer having a substantially linear structure and prepared by polycondensation of a monomer mainly containing a bifunctional halogenated aromatic compound (for example, poly-p-phenylene sulfide) is particularly preferably used. The polyarylene sulfide resin used in the present embodiment may be a mixture of two or more polyarylene sulfide resins having different molecular weights.

Other than the polyarylene sulfide resin having a linear structure, a polymer partially having a branched structure or a cross-linked structure may be used. The polymer is produced by using, in the polycondensation, a small amount of a monomer such as a polyhaloaromatic compound having three or more halogen substituents. A polymer having an improved moldability may also be used. The polymer is produced by heating a low-molecular-weight polymer having a linear structure at a high temperature in the presence of oxygen or the like, and accordingly oxidative cross-linking or thermal cross-linking increases the melt viscosity.

In the present embodiment, the polyarylene sulfide resin composition is a composition containing one or more of the above polyarylene sulfide resins and optional additives.

### [Olefin copolymer]

In the present embodiment, an olefin copolymer may be added to the polyarylene sulfide resin composition in order to improve the joint performance between the metallic member and the polyarylene sulfide resin composition member. The olefin copolymer contains, as copolymer components, an α-olefin, a glycidyl ester of an α,β-unsaturated acid, and a (meth)acrylic ester. First, the essential components will be described.

In the present invention, the α-olefin is not specifically limited, and a conventionally known α-olefin may be used. Examples of the usable α-olefin include ethylene, propylene, and butylene. Of these α-olefins, ethylene is particularly preferred. These α-olefins may be used in combination.

The glycidyl ester of an α,β-unsaturated acid is a component represented by 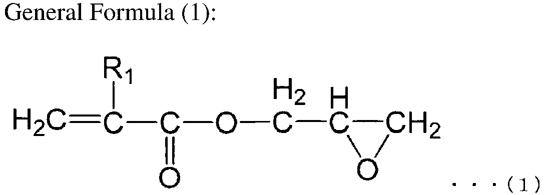 (in Formula (1), R₁ is hydrogen or a lower alkyl group).

Examples of the compound represented by General Formula (1) include glycidyl acrylate, glycidyl methacrylate, and glycidyl ethacrylate. In the present invention, glycidyl methacrylate is preferably used.

Adding the copolymer containing a glycidyl ester of an α,β-unsaturated acid as a copolymer component achieves an effect of improving the joint performance to a metal. However, a copolymer containing a copolymer component derived from the glycidyl ester at a higher content remarkably causes a mold deposit problem. It has been thought that the mold deposit is caused by thermal degradation of a thermoplastic elastomer such as an olefin copolymer at high temperatures. However, when an olefin copolymer contains, as copolymer components, an α-olefin and a glycidyl ester of an α,β-unsaturated acid but contains the glycidyl ester of an α,β-unsaturated acid in a smaller amount, the mold deposit problem is suppressed even when the olefin copolymer is used.

The acrylic ester usable in the embodiment is not specifically limited, and a conventionally known acrylic ester may be used. Examples of the usable acrylic ester include methyl acrylate, ethyl acrylate, n-propyl acrylate, isopropyl acrylate, n-butyl acrylate, n-hexyl acrylate, and n-octyl acrylate; methacrylic acid; and methacrylic esters such as methyl methacrylate, ethyl methacrylate, n-propyl methacrylate, isopropyl methacrylate, n-butyl methacrylate, isobutyl methacrylate, n-amyl methacrylate, and n-octyl methacrylate. Of these acrylic esters, methyl acrylate is particularly preferably used.

The olefin copolymer used in the embodiment may contain an additional copolymer component to such an extent that the effect of the invention is not impaired.

The olefin copolymer used in the embodiment may be produced by polymerization by a conventionally known method.

The composition of the present invention may contain the olefin copolymer at any content. In the embodiment, relative to 100 parts by mass of the polyarylene sulfide resin, the olefin copolymer is preferably contained at 0 to 20 parts by mass and more preferably at 1% by mass or more and 15% by mass or less.

### [Inorganic filler]

The resin composition of the present invention may contain an inorganic filler in order to improve mechanical strength, heat resistance, dimensional stability (deformation resistance, bending resistance), electrical properties, and other properties. As the inorganic filler, a fibrous filler, a powder and granular filler, or a plate-shaped filler is used according to a purpose. Examples of the fibrous filler include inorganic fibrous substances such as glass fibers, asbestos fibers, carbon fibers, silica fibers, silica-alumina fibers, zirconia fibers, boron nitride fibers, boron fibers, potassium titanate fibers, and fibers of a metal including stainless steel, aluminum, titanium, copper, and brass. A particularly representative fibrous filler is glass fibers or carbon fibers. Examples of the powder and granular filler include carbon black; silica; quartz powder; glass beads; glass powder; silicates such as calcium silicate, aluminum silicate, kaolin, talc, clay, diatomaceous earth, and wollastonite; metal oxides such as iron oxide, titanium oxide, zinc oxide, and alumina; metal carbonates such as calcium carbonate and magnesium carbonate; metal sulfates such as calcium sulfate and barium sulfate; and silicon carbide, silicon nitride, boron nitride, and various metal powders. Examples of the plate-shaped filler include mica, glass flakes, and various metal foils. In the embodiment, use of glass fibers, calcium carbonate, or glass bead is preferred, or combination use of them is preferred. These inorganic fillers may be used singly or in combination.

In the embodiment, the content of the inorganic filler is preferably 0 to 70 parts by mass and more preferably 0 to 65 parts by mass relative to 100 parts by mass of the polyarylene sulfide resin. If containing the inorganic filler at a content of more than 70 parts by mass, the polyarylene sulfide resin composition has a higher viscosity. Accordingly, the polyarylene sulfide resin is not filled in metallic cluster portions on the surface of a metallic member, and the airtightness between the metallic member and the polyarylene sulfide resin composition member may not be achieved.

### [Additional components]

The polyarylene sulfide resin composition used in the embodiment may contain additional resins to such an extent that the effect of the invention is not impaired. In order to impart intended properties to the molded article, a nucleating agent, carbon black, a pigment such as a sintered inorganic pigment, an antioxidant, a stabilizer, a plasticizer, a lubricant, or a releasing agent may be added, and the resulting composition having intended properties may also be included in the polyarylene sulfide resin composition used in the present invention.

### [Polyarylene sulfide resin composition]

The polyarylene sulfide resin composition in the embodiment may be prepared by a conventionally known method. For example, any of the following methods may be used: a method in which components are mixed, and then the mixture is kneaded and extruded with an extruder to prepare pellets; a method in which pellets having different formulations are once prepared, these pellets are mixed in certain amounts, and the pellet mixture is subjected to molding to yield a molded article having an intended formulation; and a method of directly feeding one or more components into a molding machine. The polyarylene sulfide resin composition in the embodiment preferably has a melt viscosity of 20 to 210 Pa·s as determined in accordance with ISO 11433 at 310°C at 1,000 sec⁻¹.

The joining method between the metallic member and the polyarylene sulfide resin composition member will be described later but is not specifically limited. For example, the metallic member and the resin composition member may be joined by welding typified by ultrasonic welding, vibration welding, and laser welding or by injection molding. For example, insert molding using a metal material as the insert member is preferably used for joining. The metallic member used in the embodiment and the processing method thereof will be described later.

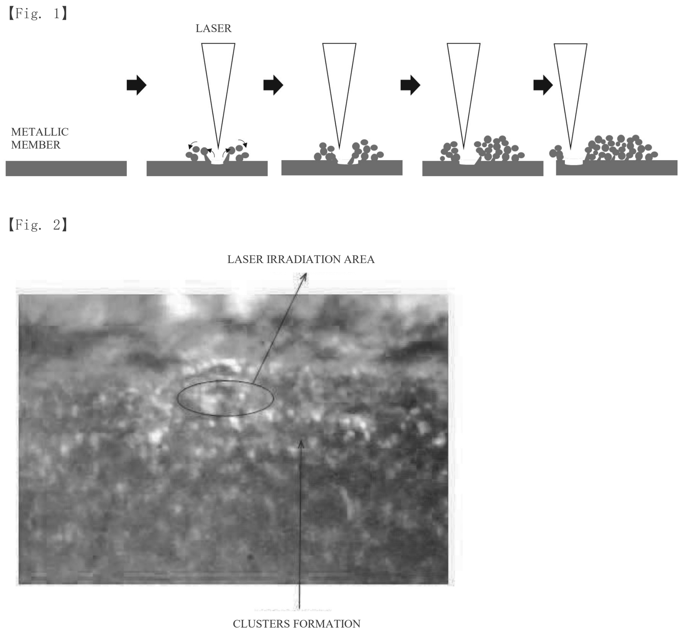

A second embodiment of the present invention is a method for processing a metallic member for a metal-resin composite molded article in which a metallic member and a polyarylene sulfide resin composition member are joined. FIG. 1 schematically shows a method for processing a metallic member in the second embodiment.

As shown in FIG. 1, when a metallic member is irradiated with laser beams, the metal on the surface of the metallic member is melted by high-energy laser beams and pushed out of the irradiation area, and then the melted metal is solidified into spheres due to the surface tension. Accordingly, irregularities are formed on the surface of the metallic member. In an embodiment, the metallic member surface is subjected to laser scanning at a fine pitch, and the formed spheres overlap with each other to form metallic clusters. Alternatively, a metallic member is sublimated and scattered into liquid metal particles, which solidify (recondense) and deposit. Accordingly, spherical metallic clusters are formed. FIG. 2 shows an image of exemplary metallic clusters formed in a laser irradiation area of a metallic member irradiated with laser beams.

If the laser output (energy per unit time) is low, the metal on the metallic member surface is not melted, or sublimated or liquefied metal particles are not scattered. To address this problem, the laser output for forming spherical metallic clusters is appropriately set according to the metal material used in a metallic member. To make a melted metal pushed out of a laser irradiation area into fine spheres, the laser scanning pitch is preferably set at 30 µm or less, and more preferably 20 µm or less, or 10 µm or less.

Based on the laser output and the irradiation speed, the energy applied to a metallic member surface per unit area and unit time is determined. Hence, in addition to the laser output, the irradiation speed is also a factor for forming spherical metallic clusters. An appropriate laser output and irradiation speed locally increases the temperature on the metallic member surface in an extremely short time, and accordingly spherical metallic clusters are formed. The method for processing a metallic member in the second embodiment may be used to form substantially spherical metallic clusters on a surface portion that is to be joined to a polyarylene sulfide resin composition member, of one surface of a metallic member used for the metal-resin composite molded article in the first embodiment.

To sufficiently ensure the airtightness of the joint face between the metallic member and the polyarylene sulfide resin composition member, spherical metallic clusters are preferably formed on the whole joint face of the metallic member to the polyarylene sulfide resin composition member. For the formation, the laser scanning pitch is preferably smaller than the laser irradiation diameter.

In the present disclosure, "high-energy beams" mean beams having such a high energy per unit time as to form spherical metallic clusters on the surface of a metallic member.

The high-energy beams are typically, but are not limited to, laser beams, and may be beams generated by an electron gun.

A third embodiment is a method for manufacturing a metal-resin composite molded article in which a metallic member and a polyarylene sulfide resin composition member are joined. The method for manufacturing a metal-resin composite molded article in the third embodiment is a method in which the surface of a metallic member is irradiated with high-energy beams such as laser beams to form irregularities on the surface of the metallic member and then the metallic member having the irregularities on the surface is melt-joined to a polyarylene sulfide resin composition member. In the third embodiment, substantially spherical metallic clusters are formed on the surface (joint face) of a metallic member.

When spherical metallic clusters are formed on the joint face between a metallic member and a polyarylene sulfide resin composition member, and then the metallic member and the polyarylene sulfide resin composition member are subjected to insert molding, the melted polyarylene sulfide resin composition is embedded in the spherical metallic cluster portions, and the metal and the polyarylene sulfide resin composition adhere firmly in the molding step. Accordingly, the manufactured metal-resin composite molded article achieves higher airtightness than conventional articles on the joint face between the metallic member and the polyarylene sulfide resin composition member.

The range in which the spherical metallic clusters are formed on the surface of a metallic member is preferably, but is not limited to, the whole area of the joint face between the metallic member and the polyarylene sulfide resin composition member. For example, spherical metallic clusters formed on a large area of the joint face, for example, at least 70 to 80% of the joint face, ensure sufficiently high airtightness of the joint face between the metallic member and the polyarylene sulfide resin composition member.

For example, if the whole area of the joint face between the metallic member and the polyarylene sulfide resin composition member is subjected to laser irradiation, but the laser scanning pitch is larger than the laser irradiation diameter, the joint face has a region not irradiated with laser beams. Even in the case, when a region not irradiated with laser beams is relatively small in the joint face, sufficiently high airtightness is ensured on the joint face between the metallic member and the polyarylene sulfide resin composition member.

The inventors of the present invention have focused on the shape of spherical metallic clusters formed on the surface of a metallic member and have studied the relationship between the parameter of surface roughness on various metallic member surfaces and the airtightness of the joint face of the metallic member to the polyarylene sulfide resin composition member. The result has revealed that by setting the peak Spc (Spc of the peak, arithmetic mean peak curvature) of spherical metallic clusters within a certain range, the joint face between the metallic member and the polyarylene sulfide resin composition member has a much higher airtightness. The Spc (arithmetic mean peak curvature) is a parameter of surface properties defined in ISO 25178 and represents the mean value of principal curvatures of peaks formed on the surface to be evaluated. A small Spc indicates that the point (peak) in contact with another object (in the embodiment, the polyarylene sulfide resin composition member) is rounded, whereas a large Spc indicates that the point in contact with another object is sharp.

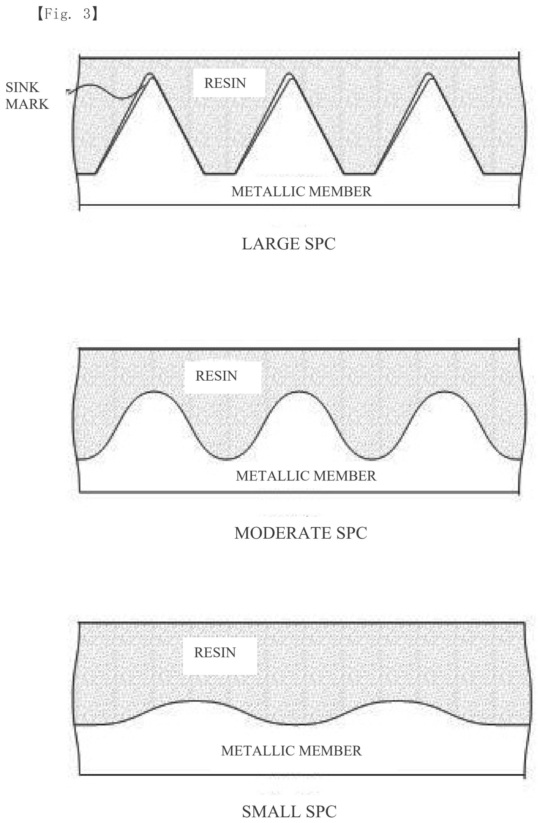

The reason why setting the peak Spc of spherical metallic clusters within a certain range improves the airtightness of the joint face between a metallic member and a resin is improved by is supposed as follows, with reference to FIGS. 3.

FIGS. 3 are views each schematically illustrating the joint face between a metallic member and a polyarylene sulfide resin composition member: in a case, the peak Spc of spherical metallic clusters formed on the surface of a metallic member is large ("large Spc"); in another case, the peak Spc is moderate ("moderate Spc"); and in the other case, the peak Spc is small ("small Spc"). On a metallic member surface having a large Spc, the peaks of the spherical metallic clusters are sharp. When a polyarylene sulfide resin composition in contact with the surface is cooled, sink marks are formed (shrinkage is caused). If metallic clusters have sharp peaks, gaps are easily formed between the polyarylene sulfide resin composition and the metal on the joint face of the peaks, and this is disadvantageous for high airtightness. Whereas on a metallic member surface having a small Spc, spherical metallic clusters generally gradually change as a surface property. The joint between the metallic member and a polyarylene sulfide resin composition member has a small surface area, and in the molding step of the metal-resin composite molded article, the adhesion between the metallic member and the polyarylene sulfide resin composition member is unlikely to increase. On a metallic member surface having a moderate Spc, a melted polyarylene sulfide resin composition is sufficiently embedded in the spherical metallic cluster portions on the metallic member surface. It is therfore surmised that the adhesion between the metallic member and the polyarylene sulfide resin composition member of the metal-resin composite molded article is extremely improved.

Specifically, the spherical metallic clusters on the metallic member surface preferably have a peak Spc ranging from 5,000 to 7,000 (1/mm) and more preferably ranging from 5,500 to 6,500 (1/mm).

To adjust the Spc within an intended range, the energy applied by laser irradiation to a face to be the joint face between a metallic member and a polyarylene sulfide resin composition member is controlled. When a pulsed laser is used as the laser, the energy E per pulse is represented by P/f where P is an average output, and f is a frequency. By adjusting the average output P (what is called laser output) and/or the frequency f, the energy applied to a face to be the joint face between a metallic member and a polyarylene sulfide resin composition member is controlled. For example, when the frequency of a pulse laser increases, the energy amount per pulse applied to the surface of a metallic member decreases. Accordingly, the Spc is likely to decrease. When the frequency of a pulse laser decreases, the energy amount per pulse applied to the surface of a metallic member increases. Accordingly, the Spc is likely to increase. However, when the energy amount is sufficiently large, the Spc plateaus. The Spc may change depending on environmental conditions (for example, at a low environmental temperature, the Spc may decrease). Hence, whether the Spc is within an intended range is verified after laser irradiation.

Particles constituting the metallic clusters preferably have a particle size of 1 to 500 µm, more preferably 5 to 300 µm, and particularly preferably 10 to 200 µm. If the particle size is less than 1 µm, a polyarylene sulfide resin may not be filled in gaps among particles constituting the clusters, and the adhesion may not be achieved. If the particle size is more than 500 µm, a polyarylene sulfide resin may shrink after molding to generate gaps on the metallic member, and the airtightness may not be achieved.

The metallic member and the polyarylene sulfide resin composition member may be joined by any method, but may be joined by welding typified by ultrasonic welding, vibration welding, and laser welding or by injection molding. For example, insert molding using a metal material as the insertion member may be used for the joining. In other words, such a metallic member having spherical metallic clusters on the surface as described above is inserted into a mold; a polyarylene sulfide resin composition is injected into the mold; and the whole is molded to join the polyarylene sulfide resin composition member to the surface of the metallic member.

### Examples

Hereinafter, production of a metal-resin composite molded article will be specifically described.

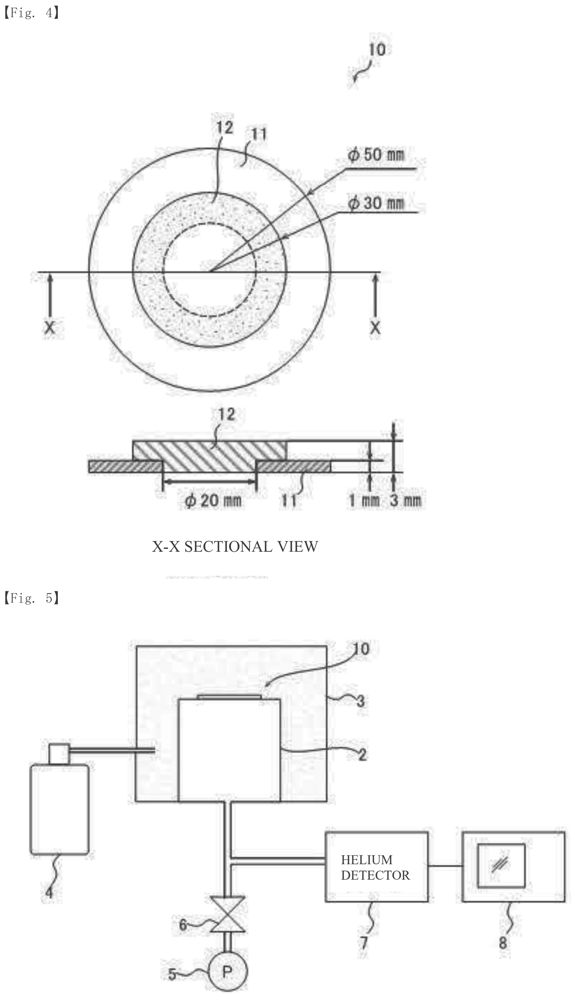

In examples, a metal-resin composite molded article 10 (hereinafter called "test piece 10") having the shape shown in FIGS. 4 was produced as a test piece.

As shown in FIGS. 4, the test piece 10 comprised an annular metallic member 11 having an inner hole at the center and a resin molded article 12 placed in the inner hole of the metallic member 11. The metallic member 11 had an outer diameter of ϕ50 mm, an inner hole diameter of ϕ20 mm, and a thickness of 1 mm. The resin molded article 12 had an outer diameter of ϕ30 mm and a thickness of 3 mm.

The components used as the materials of the metallic member 11 and the resin molded article 12 are described below.
· Metallic member: aluminum A5052, copper C1100
· Polyarylene sulfide resin composition:
   Polyarylene sulfide resin 1: Fortron KPS (melt viscosity: 20 Pa·s (shear velocity: 1,200 sec⁻¹, 310°C)) manufactured by KUREHA
   Polyarylene sulfide resin 2: Fortron KPS (melt viscosity: 28 Pa·s (shear velocity: 1,200 sec⁻¹, 310°C)) manufactured by KUREHA
   Polybutylene terephthalate resin: "300FP" manufactured by Polyplastics
   Polyethylene terephthalate resin: "PET II" manufactured by TAKAYASU
   Olefin copolymer 1: "BONDFAST 7L" manufactured by Sumitomo Chemical
   Olefin copolymer 2: "BONDFAST 7M" manufactured by Sumitomo Chemical
   Glass fibers 1: "ECS03T747" manufactured by Nippon Electric Glass
   Glass fibers 2: "ECS03T187" manufactured by Nippon Electric Glass
   Calcium carbonate: "MC-35W" manufactured by Asahi Koumatsu
   Carbon black: "MA600B" manufactured by Mitsubishi Chemical
   Pentaerythritol stearate ester: LOXYOL VPG861 manufactured by Emery Oleochemicals Japan
   Antioxidant: "Irganox 1010" manufactured by BASF Japan
   Phosphorus stabilizer: monocalcium phosphate manufactured by Taihei Chemical Industrial

Table 1 lists the component ratios of polyarylene sulfide resin compositions as the material of the resin molded article. The melt viscosities of the polyarylene sulfide resin compositions in Table 1 were determined in accordance with ISO 11433 as described below.

With a Capilograph manufactured by Toyo Seiki Seisaku-sho, a 1 mmϕ × 20 mmL flat die was used as the capillary, and the melt viscosity was determined at a barrel temperature of 310°C and a shear velocity of 1,000 sec⁻¹.

**[Table 1] Type of polyarylene sulfide resin composition**

| | Material 1 | Material 2 | Material 3 | Material 4 |
|---|---|---|---|---|
| Polyarylene sulfide resin 1 | | 100 | | |
| Polyarylene sulfide resin 2 | 100 | | 100 | |
| Polybutylene terephthalate resin | | | | 100 |
| Polyethylene terephthalate resin | | | | 25.2 |
| Olefin copolymer 1 | 10.3 | | | |
| Olefin copolymer 2 | | 13.9 | | 9.1 |
| Glass fibers 1 | 60.1 | 69.4 | 67.6 | |
| Glass fibers 2 | | | | 45.3 |
| Calcium carbonate | | 46.3 | | |
| Carbon black | 0.3 | 0.5 | 0.3 | 0.9 |
| Pentaerythritol stearate ester | 0.3 | 0.7 | 0.5 | |
| Antioxidant | 0.5 | 0.7 | 0.5 | 0.5 |
| Phosphorus stabilizer | | | | 0.1 |
| Melt viscosity (Pa·s, 310°C) | 160 | 230 | 260 | 195 |

Before joining to a resin molded article 12, a range of ϕ20 mm to ϕ26 mm on the surface of a metallic member 11 (the joint face to the resin molded article 12) was subjected to laser processing concentrically with a laser processing machine (ML-7350DL manufactured by Amada Weld Tech).

Table 2 lists laser irradiation conditions in Examples 1 and 2. Table 3 and Table 4 list laser irradiation conditions in Comparative Examples 1 to 11. Not described in Tables, the laser irradiation pitch was 10 µm, and the irradiation diameter was 58 µm, in Examples and Comparative Examples. The pitch is an interval between concentric circles for laser scanning. The pitch was smaller than the irradiation diameter, and thus the whole area of the joint face between the metallic member 11 and the resin molded article 12 was irradiated with laser beams.

In Examples and Comparative Examples, the surface of each metallic member 11 was observed under an SEM (scanning electron microscope), and this ascertained that spherical metallic clusters were formed on the whole area. A laser microscope VK-X3000 manufactured by Keyence was used to determine the peak Spc of the spherical metallic clusters formed on the surface of each metallic member 11 (see Table 2 to Table 4).

The metallic member 11 was subjected to laser processing, and then insert molding was performed in the following conditions while the metallic member 11 was used as the insert member, and materials listed in Table 1 were used as the resin composition. Accordingly, the metallic member 11 and the resin molded article 12 were joined, and a test piece 10 of the metal-resin composite molded article shown in FIG. 4 was molded. The insert molding conditions are described below.
· Injection molding machine: TR100EH manufactured by Sodick
· Cylinder temperature: 320°C (Examples 1 and 2, Comparative Examples 1 to 11)
   260°C (Comparative Examples 12 to 15)
· Mold temperature: 150°C (Examples 1 and 2, Comparative Examples 1 to 11)
   80°C (Comparative Examples 12 to 15)
· Injection speed: 15 mm/s
· Holding pressure: 50 MPa

Next, each test piece 10 molded as Examples and Comparative Examples was subjected to airtightness test on the joint face between the metallic member 11 and the resin molded article 12. The structure of the test apparatus for the airtightness test (helium leak test, vacuum method) is shown in FIG. 5.

As shown in FIG. 5, a jig 2 and a test piece 10 were placed in a chamber 3 isolated from the outside. The jig 2 has a rectangular parallelepiped shape with a base, and when a test piece 10 is placed on the upper part, the inside of the jig 2 is isolated from the rest in the chamber 3. A valve 6 was opened, and the inside of the jig 2 was evacuated by a vacuum pump 5. Next, the valve 6 was closed, and the chamber 3 was filled with helium gas from a helium cylinder 4. Helium gas leaking through the joint of the test piece 10 in the chamber 3 was detected by a helium detector 7. A controller 8 was to display the detection result of helium gas.

As the helium detector 7, a helium leak tester G-FINE manufactured by COSMO INSTRUMENTS and L300i manufactured by INFICON were used.

The helium pressure in the chamber 3 was set at 400 kPa, and the vacuum pressure in the jig 2 was set at 100 kPa. If the joint between the metallic member 11 and the resin molded article 12 of a test piece 10 has poor airtightness, the helium gas in the chamber 3 flows into the jig 2 and is detected by the helium detector 7. In the test, when the helium pressure (detection pressure) detected by the helium detector 7 is not less than 1.0 × 10⁻⁷ (in Tables, expressed as "1.0E-7") Pa·m³/s, the airtightness is evaluated as poor, whereas when the helium pressure is less than 1.0 × 10⁻⁷ (1.0E-7) Pa·m³/s, the airtightness is evaluated as good.

As the detection pressure in the airtightness test on each test piece, Table 2 shows the results in Examples 1 and 2, Table 3 and Table 5 show the results in Comparative Examples 1 to 15.

**[Table 2] Examples**

| | Example 1 | Example 2 | Example 3 | Example 4 |
|---|---|---|---|---|
| Material | 1 | 1 | 1 | 1 |
| Metal | A5052 | A5052 | A5052 | C1100 |
| Laser output (W) | 19.5 | 44 | 44 | 44 |
| Frequency (kHz) | 50 | 50 | 50 | 50 |
| Irradiation speed (mm/s) | 1000 | 1000 | 500 | 1000 |
| Laser scanning pitch (µm) | 10 | 10 | 10 | 10 |
| Metal member Spc (1/mm) | 5427 | 5871 | 6341 | 5000 |
| Detection pressure (Pa·m³/s) | 1.0E-10 | 1.0E-10 | 1.0E-10 | 1.0E-10 |

**[Table 3] Comparative Examples**

| | Comparative Example 1 | Comparative Example 2 | Comparative Example 3 | Comparative Example 4 | Comparative Example 5 | Comparative Example 6 |
|---|---|---|---|---|---|---|
| Material | 1 | 1 | 2 | 2 | 2 | 3 |
| Metal | A5052 | A5052 | A5052 | A5052 | A5052 | A5052 |
| Laser output (W) | 44 | 1.75 | 44 | 44 | 44 | 1.75 |
| Frequency (kHz) | 50 | 50 | 50 | 50 | 50 | 50 |
| Irradiation speed (mm/s) | 100 | 1000 | 100 | 500 | 1000 | 1000 |
| Laser scanning pitch (µm) | 10 | 10 | 10 | 10 | 10 | 10 |
| Metal member Spc (1/mm) | 7419 | 2091 | 7419 | 6640 | 5828 | 2091 |
| Detection pressure (Pa·m³/s) | 1.0E-05 | 1.0E-03 | 1.0E-05 | 1.0E-07 | 1.0E-07 | 1.0E-03 |

**[Table 4] Comparative Examples**

| | Comparative Example 7 | Comparative Example 8 | Comparative Example 9 | Comparative Example 10 | Comparative Example 11 |
|---|---|---|---|---|---|
| Resin | 3 | 3 | 3 | 3 | 3 |
| Metal | A5052 | A5052 | A5052 | A5052 | A5052 |
| Laser output (W) | 15.5 | 19.5 | 44 | 44 | 44 |
| Frequency (kHz) | 50 | 50 | 50 | 50 | 50 |
| Irradiation speed (mm/s) | 1000 | 1000 | 1000 | 500 | 100 |
| Laser scanning pitch (µm) | 10 | 10 | 10 | 10 | 10 |
| Metal member Spc (1/mm) | 5208 | 5427 | 5871 | 6341 | 7419 |
| Detection pressure (Pa·m³/s) | 1.0E-07 | 1.0E-06 | 1.0E-05 | 1.0E-05 | 1.0E-05 |

**[Table 5] Comparative Examples**

| | Comparative Example 12 | Comparative Example 13 | Comparative Example 14 | Comparative Example 15 |
|---|---|---|---|---|
| Resin | 4 | 4 | 4 | 4 |
| Metal | A5052 | A5052 | A5052 | A5052 |
| Laser output (W) | 44 | 44 | 44 | 1.75 |
| Frequency (kHz) | 50 | 50 | 50 | 50 |
| Irradiation speed (mm/s) | 100 | 500 | 1000 | 1000 |
| Laser scanning pitch (µm) | 10 | 10 | 10 | 10 |
| Metal member Spc (1/mm) | 7419 | 6341 | 5871 | 2091 |
| Detection pressure (Pa·m³/s) | 1.0E-03 | 1.0E-06 | 1.0E-06 | 1.0E-03 |

Tables 2 to 5 reveal that when the polyarylene sulfide resin composition has a melt viscosity of 210 Pa·s or less, and metallic clusters of the metallic member have a peak Spc of 5,000 to 7,000 (1/mm), the joint between the metallic member and the polyarylene sulfide resin composition member has high airtightness (i.e., the detection pressure is low). From Comparative Examples 1 and 2, even when the polyarylene sulfide resin composition has a melt viscosity of 210 Pa·s or less, but when the metallic member has an Spc out of the range, good airtightness was not achieved. As shown in Comparative Examples 4, 5, and 7 to 10, even when the metallic member has an Spc within the range, but when the polyarylene sulfide resin composition has a melt viscosity of more than 210 Pa·s, the joint between the metallic member and the polyarylene sulfide resin composition member failed to have good airtightness. As shown in Comparative Examples 13 and 14 where the resin composition was not the polyarylene sulfide resin composition, even when the metallic member has an Spc of 5,000 to 7,000 (1/mm), and the resin composition had a viscosity of 210 Pa·s or less, the joint between the metallic member and the polyarylene sulfide resin composition member failed to have good airtightness.

The embodiments of the present invention have been described in detail, but the present invention is not limited to the embodiments. The above embodiments may be variously improved or modified without departing from the spirit of the present invention.

### Reference Signs List

- 2: jig
- 3: chamber
- 4: helium cylinder
- 5: vacuum pump
- 6: valve
- 7: helium detector
- 8: controller
- 10: metal-resin composite molded article
- 11: metallic member
- 12: resin molded article

## Claims

1. A metal-resin composite molded article comprising:
a metallic member; and
a polyarylene sulfide resin composition member joined to the metallic member, wherein
of one surface of the metallic member, a surface portion joined to the polyarylene sulfide resin composition member has an arithmetic mean peak curvature of 5,000 to 7,000 (1/mm), and
a polyarylene sulfide resin composition contained in the polyarylene sulfide resin composition member has a melt viscosity of 20 to 210 Pa·s in accordance with ISO 11433 at 310°C at 1,000 sec⁻¹.

2. The metal-resin composite molded article according to claim 1, wherein on the surface portion, a substantially spherical metallic cluster is formed, and
the metallic cluster has an arithmetic mean peak curvature of 5,000 to 7,000 (1/mm).

3. The metal-resin composite molded article according to claim 1, wherein the polyarylene sulfide resin composition comprises an olefin copolymer, and
the olefin copolymer comprises, as a copolymer component, an α-olefin, a glycidyl ester of an α,β-unsaturated acid, and an acrylic ester.

4. The metal-resin composite molded article according to claim 1, wherein the surface portion has an arithmetic mean peak curvature of 5,500 to 6,500 (1/mm).

5. A method for manufacturing a metal-resin composite molded article in which a metallic member and a polyarylene sulfide resin composition member are joined, the method comprising:
irradiating a surface of the metallic member with high-energy beams to make the surface have an arithmetic mean peak curvature of 2,500 to 7,000 (1/mm);
inserting the metallic member into a mold; and
injection-molding a polyarylene sulfide resin composition to join the polyarylene sulfide resin composition member to the surface of the metallic member.

6. A method for manufacturing a metal-resin composite molded article in which a metallic member and a polyarylene sulfide resin composition member are joined, the method comprising:
irradiating a surface of the metallic member with high-energy beams to form a substantially spherical metallic cluster on the surface, the metallic cluster having an arithmetic mean peak curvature of 2,500 to 7,000 (1/mm);
inserting the metallic member having the substantially spherical metallic cluster on the surface into a mold; and
injection-molding a polyarylene sulfide resin composition to join the polyarylene sulfide resin composition member to the surface of the metallic member.

7. The method for manufacturing a metal-resin composite molded article according to claim 4, wherein the metallic cluster has an arithmetic mean peak curvature of 5,000 to 7,000 (1/mm).

8. The method for manufacturing a metal-resin composite molded article according to claim 4, wherein the metallic cluster has an arithmetic mean peak curvature of 5,500 to 6,500 (1/mm).

9. A method for processing a metallic member for a metal-resin composite molded article in which a metallic member and a polyarylene sulfide resin composition member are joined, the method comprising:
irradiating a surface of the metallic member with high-energy beams to make the surface have an arithmetic mean peak curvature of 2,500 to 7,000 (1/mm).

10. A method for processing a metallic member for a metal-resin composite molded article in which a metallic member and a polyarylene sulfide resin composition member are joined, the method comprising:
irradiating a surface of the metallic member with high-energy beams to form a substantially spherical metallic cluster on the surface, the metallic cluster having an arithmetic mean peak curvature of 2,500 to 7,000 (1/mm).

11. The method for processing a metallic member according to claim 9, wherein the surface has an arithmetic mean peak curvature of 5,000 to 7,000 (1/mm).

12. The method for processing a metallic member according to claim 9, wherein the surface has an arithmetic mean peak curvature of 5,500 to 6,500 (1/mm).
